(19) Europäisches Patentamt
European Patent Office
Office européen des brevets

(11) **EP 3 534 134 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **19160398.4**

(22) Anmeldetag: **01.03.2019**

(51) Internationale Patentklassifikation (IPC):
**G01M 1/22** *(2006.01)*    **G01M 1/30** *(2006.01)*

(52) Gemeinsame Patentklassifikation (CPC):
**G01M 1/22; G01M 1/30**

(54) **VERFAHREN ZUR KALIBRIERUNG EINER AUSWUCHTMASCHINE**

METHOD FOR CALIBRATING A BALANCING MACHINE

PROCÉDÉ D'ÉTALONNAGE D'UNE MACHINE D'ÉQUILIBRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2018 DE 102018104846**

(43) Veröffentlichungstag der Anmeldung:
**04.09.2019 Patentblatt 2019/36**

(73) Patentinhaber: **Schenck RoTec GmbH 64293 Darmstadt (DE)**

(72) Erfinder: **Trukenmüller, Dr. Kai 64283 Darmstadt (DE)**

(74) Vertreter: **Haarpatent Patentanwälte Krämer Meyer Goethestraße 2 61231 Bad Nauheim (DE)**

(56) Entgegenhaltungen:
- **XIAOPING YU: "General Influence Coefficient Algorithm in Balancing of Rotating Machinery", INTERNATIONAL JOURNAL OF ROTATING MACHINERY, Bd. 10, Nr. 2, 1. März 2004 (2004-03-01), Seiten 85-90, XP055603462, US ISSN: 1023-621X, DOI: 10.1080/10236210490276674**
- **MARK S. DARLOW: "Balancing of high-speed machinery: Theory, methods and experimental results", MECHANICAL SYSTEMS AND SIGNAL PROCESSING, Bd. 1, Nr. 1, 1. Januar 1987 (1987-01-01), Seiten 105-134, XP055603465, AMSTERDAM, NL ISSN: 0888-3270, DOI: 10.1016/0888-3270(87)90087-2**

**Beschreibung**

Die Erfindung betrifft ein Verfahren zur Kalibrierung einer Auswuchtmaschine in einem Ausgleichlauf $k$, bei dem ein auszugleichender Rotor in Lagern drehbar gelagert und mittels einer Antriebseinheit beschleunigt wird.

Bei einer Kalibrierung einer Auswuchtmaschine, wird bei der Serienfertigung meist aus einem Produktionsteil ein Meisterteil, z. B. ein Meisterrotor gefertigt, der das Ansetzen bekannter Testunwuchten zulässt. Mit diesem Meister wird der Auswuchtprozess kalibriert im Sinne von eingestellt, indem jeweils für jede Unwuchtebene ein Testgewicht angesetzt wird und die Schwingung gemessen wird. Zusätzlich wird die Schwingung des Rotors ohne Testgewichte gemessen. Aus den Differenzen kann der Einfluss der Unwucht auf die Schwingungen bestimmt werden.

Die hieraus resultierende Einflusskoeffizientenmatrix wird im Messgerät abgespeichert und im Anschluss für die Unwuchtmessung von jedem weiteren Teil benutzt. Das Einflusskoeffizientenverfahren wird häufig im Zusammenhang mit wellenelastischen Rotoren benutzt, kann jedoch ebenfalls beim Auswuchten starrer Rotoren verwendet werden. Im Falle starrer Rotoren ist lediglich die Größe der Einflusskoeffizientenmatrix kleiner und es wird nur eine feste Drehzahl benutzt.

Es sei $\vec{s}$ der Vektor der Schwinggröße eines Messlaufs der Länge $M$, der Anzahl der Messpunkte. Als ein Messpunkt wird in der Regel eine Messung mit einem Sensor oder die Messung bei einer festen Drehzahl bzw. einem Drehzahlintervall bezeichnet. Falls mehrere Sensoren oder mehrere Drehzahlen verwendet werden, ist $M$ das Produkt aus der Anzahl der Sensoren und der Anzahl an Drehzahlstützstellen.

Im Unwuchtvektor $\vec{u}$ werden die Unwuchten der Ebenen gespeichert. Die Länge des Vektors ist $P$, die Anzahl der Unwuchtebenen.

Unter der Annahme eines linearen Übertragungsverhaltens der Unwuchten auf die gemessenen Schwingungen, kann das System als lineares Gleichungssystem formuliert werden:

$$\vec{s} = K\,\vec{u}$$

Hierbei ist $K$ die Einflusskoeffizientenmatrix oder die Kalibriermatrix. Sie hat die Dimension $M \times P$.

Sowohl die Elemente des Schwingvektors $\vec{s}$, sowie des Unwuchtvektors und der Einflusskoeffizientenmatrix sind komplexe Zahlen. Im Falle der Schwinggrößen werden darunter die Amplitude und Phase der ersten Ordnung bezüglich eines Drehzahlsensors verstanden, im Falle der Unwuchtgrößen der Betrag und der Winkel der Unwucht am Rotor.

Die Identifikation der Kalibriermatrix $K$ erfolgt im Kalibrierprozess mittels der Meisterkalibrierung mit Testunwuchten.

Wenn die Matrix $K$ bekannt ist, kann aus jedem Messlauf (auch neue Teile gleicher Bauart) ein Unwuchtvektor aus dem Schwingwertvektor berechnet werden. Das erfolgt durch Lösung des linearen Gleichungssystems, falls $K$ eine quadratische Matrix ist, oder mittels der linearen Ausgleichsrechnung falls $K$ mehr Zeilen als Spalten hat, also überbestimmt ist.

Die Veröffentlichung "GENERAL INFLUENCE COEFFICIENT ALGORITHM IN BALANCING OF ROTATING MACHINERY", erschienen am 1. März 2004 im Bd. 10, Nr. 2 des INTERNATIONAL JOURNAL OF ROTATING MACHINERY auf den Seiten 85-90 beschreibt ein Optimierungsverfahren zur Berechnung der Einflusskoeffizienten. Die Veröffentlichung "Balancing of high-speed machinery: Theory, methods and experimental results", erschienen am 1 Januar 1987 in Bd. 1, Nr. 1, MECHANICAL SYSTEMS AND SIGNAL PROCESSING auf den Seiten 105-134 beschreibt ein weiteres Optimierungsverfahren der Einflusskoeffizienten.

Die bekannten Kalibrierungsverfahren unter Verwendung von Meisterteilen können Fehler enthalten, die sich anschließend auf den kompletten Produktionsprozess auswirken. Die Folge ist ein unnötig schlechter Unwuchtausgleich.

Der Erfindung liegt die Aufgabe zugrunde, eine alternative Kalibrierung einer Auswuchtmaschine bereitzustellen.

Die Aufgabe wird erfindungsgemäß dadurch gelöst, dass ein Verfahren nach Anspruch 1 zur

Kalibrierung einer Auswuchtmaschine in einem Ausgleichlauf k für in einem Serienprozess gefertigte Rotoren bereitgestellt wird, bei dem ein auszugleichender Rotor in Lagern drehbar gelagert und mittels einer Antriebseinheit beschleunigt wird.

Die Kalibrierung der Auswuchtmaschine erfolgt also während des Ausgleichslauf, so dass kein separater Kalibrierlauf mit einem Meisterteil notwendig ist. Außerdem kann die Kalibrierung der Auswuchtmaschine bei jedem Ausgleichslauf durchgeführt werden oder zu definierten Zeitpunkten. Ein Rotor ist im Sinne der Erfindung ein rotierender Körper. Das Verfahren ist für verschiedene Auswuchtmaschinen anwendbar, die zum Auswuchten unterschiedlicher rotierender Körper verwendet werden (zum Beispiel Wellen, Turboladerrotoren, usw.). Ein Vorteil des erfindungsgemäßen Verfahrens ist, dass pro Rotor insbesondere nur zwei Messungen benötigt werden, nämlich eine vor und eine nach dem Ausgleich, auch wenn der Rotor mehr als eine Unwuchtebene besitzen sollte.

Für die Messung des aktuell auszuwuchtenden Rotors wird insbesondere die aktuell vorliegende Prozesskalibriermatrix herangezogen. Nachdem der Rotor gemessen und ausgeglichen wurde, können die Messdaten des Rotors einer Prozesskalibriermatrix $K$, die auch die bestehende Kalibriermatrix der Auswuchtmaschine sein kann, hinzugefügt werden, so dass diese durch die erhaltenen Messdaten verbessert wird. Schritt e. des Verfahrens kann somit derart ausgestaltet sein, dass entweder aus den Messdaten eine Prozesskalibriermatrix $K$ durch Lösung des Gleichungssystems $S = UK^T$ bestimmt wird, indem die Messdaten im Wesentlichen gemäß Schritte a.-d. der Prozesskalibriermatrix hinzugefügt und diese somit verbessert wird oder bei dem anhand der Ausgangsschwingung $\vec{s_0}$ und/oder des Unwuchtvektors $\vec{u}$ eine bereits vorliegende Prozesskalibriermatrix ausgewählt wird.

Das erfindungsgemäße Verfahren kommt insbesondere bei der Serienproduktion von Rotoren zum Einsatz. Mithilfe des Verfahrens ist es möglich, dass jeder Rotor vorteilhafterweise nur zweimal gemessen wird und lediglich ein Ausgleichschritt notwendig ist. Die erfassten Daten können zur Verbesserung der Prozesskalibriermatrix genutzt werden, indem sie der Matrix hinzugefügt werden.

Das Verfahren weist sich als besonders vorteilhaft aus, da es insbesondere dann zum Einsatz kommt, wenn die Kalibrierung mittels eines Meisterteils entweder relativ stark fehlerbehaftet ist oder der Ausgleich nicht exakt der Unwuchtvorgabe folgen kann und ein systematischer Fehler entsteht (zum Beispiel Bohrtiefe, Winkelfehler). Die Kalibrierung mittels eines Meisterrotors ist nicht mehr notwendig.

Die Prozesskalibriermatrix kann mithilfe des Gleichungssystems $S = UK^T$ bestimmt und als Kalibriermatrix in der Auswerteeinheit gespeichert werden, so dass beim Auswuchten weiterer Rotoren diese Kalibriermatrix zur Berechnung des Unwuchtvektors herangezogen werden kann. Es kann jedoch auch auf eine bereits vorliegende Prozesskalibriermatrix zurückgegriffen werden. Diesbezüglich ist es bevorzugt, dass Parameter (zum Beispiel Ausgangsschwingung, Unwucht, Größe einer Formabweichung, z. B. des Lagerspiels, usw.) des auszuwuchtenden Rotors zu denen der Rotoren passen, mit deren Messdaten die gespeicherte Prozesskalibriermatrix gebildet wurde.

Es ist bevorzugt, dass die Matrix S für jeden Ausgleichschritt eine Zeile mit einem transponierten Schwingvektor $S_k = \delta \vec{s_k^T}$ für den Schritt $k$ enthält und die Matrix $U$ in jeder Zeile den transponierten Unwuchtvektor $U_k = \vec{u_k^T}$ des Schrittes $k$ enthält und die Prozesskalibriermatrix durch Transposition von $K^T$ berechnet wird, wobei für die Berechnung der Prozesskalibriermatrix $K$ mithilfe des Gleichungssystems $S = UK^T$ Messdaten einer Vielzahl bereits ausgeglichener Rotoren verwendet werden. Das Gleichungssystem $S = UK^T$ kann mittels eines Optimierungsverfahrens, insbesondere mittels des Verfahrens der linearen Ausgleichsrechnung gelöst werden. Vorteilhafterweise werden Messdaten von Rotoren verwendet, die im Wesentlichen ähnliche oder sogar identische Parameter aufweisen, wie der auszugleichende Rotor.

In einer Ausgestaltung ist vorgesehen, dass bereits ausgewuchtete Rotoren nach ihrer Ausgangsschwingung $\vec{s_0}$, und/oder ihres Unwuchtvektors $\vec{u}$ in Cluster eingeteilt werden und aus deren Ausgangsschwingungen und/oder Unwuchtvektoren eine Cluster-Prozesskalibriermatrix, insbesondere durch Lösung des Gleichungssystems $S = UK^T$ berechnet wird, und diese als bereits vorliegende Prozesskalibriermatrix verwendet wird, wobei eine Cluster-Prozesskalibriermatrix als bereits vorliegende Prozesskalibriermatrix ausgewählt wird, die Rotoren umfasst, deren Ausgangsschwingungen und/oder Unwuchtvektoren zu der Ausgangsschwingung und/oder des Unwuchtvektors des auszuwuchtenden Rotors zumindest ähnlich sind. Es kann auch vorteilhaft sein, dass anstelle der Ausgangsschwingungen $\vec{s_0}$ die Unwuchtvektoren für die Berechnung der Cluster-Prozesskalibriermatrix verwendet werden. Die Größe des Clusters ist frei wählbar. Auch können weitere Parameter der Rotoren zur Clusterbildung herangezogen werden.

Es kann bevorzugt sein, dass eine Cluster-Prozesskalibriermatrix aus ausgewählten Cluster-Prozesskalibriermatrizen interpoliert wird und diese als bereits vorliegende Prozesskalibriermatrix verwendet wird. Sofern mehrere Cluster-Prozesskalibriermatrizen vorliegen und der auszuwuchtende Rotor Parameter aufweist, die keine eindeutige Auswahl einer Cluster-Prozesskalibriermatrix erlauben, kann eine neue Cluster-Prozesskalibriermatrix aus den bereits vorliegenden Cluster-Prozesskalibriermatrizen interpoliert werden, und zwar mit Daten von Rotoren, die zu der Ausgangsschwingung und/oder des Unwuchtvektors des auszuwuchtenden Rotors im Wesentlichen identisch sind.

Vorteilhafterweise kann die Kalibrierung entweder einmalig für eine definierte Anzahl von Rotoren erfolgen oder bei dem jedem Lauf der Auswuchtmaschine aktualisiert werden. Hierdurch kann die Kalibrierung bei jedem Lauf verbessert werden.

Die Erfindung wird nachfolgend anhand eines Ausführungsbeispiels der Erfindung näher erläutert, das in der Zeichnung dargestellt ist. Es zeigen

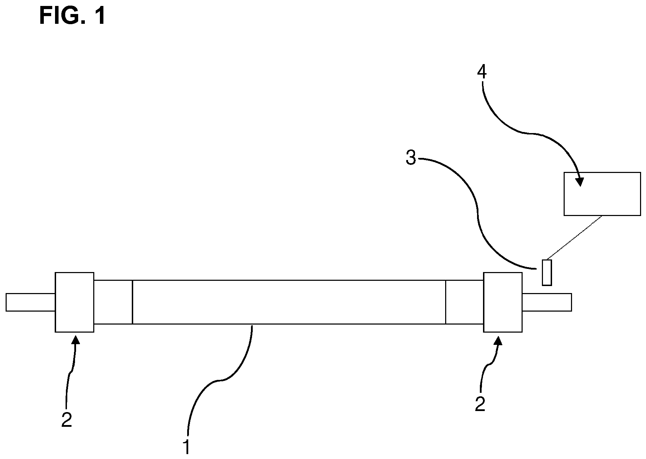

Figur 1     einen gelagerten Rotor in einer Auswuchtmaschine.

Figur 1 zeigt schematisch eine Auswuchtmaschine, in der ein angetriebener Rotor 1 in Lagern 2 gelagert ist. Bei den Lagern 2 kann es sich um weiche oder starre Lager handeln. Aus Messwerten eines Messaufnehmers 3 (zum Beispiel ein Schwingungssensor) können Schwingungen des Rotors 1 berechnet werden. Die erfassten Messwerte werden einer Auswerteeinrichtung 4 zugeführt. Weitere Sensoren, wie zum Beispiel ein Drehzahl- und Winkelsensor können vorgesehen sein. Ein als Schwingungssensor gestalteter Messaufnehmer 3 kann Schwingungen beispielsweise an Lagerständern, direkt am Rotor oder an einem Gehäuse messen. Die Position des Messaufnehmers 3 ist für die Durchführung des gegenständlichen Verfahrens nicht entscheidend.

Auch kann die Anzahl der Aufnehmer an den jeweiligen Anwendungsfall angepasst werden.

Ein Antrieb der Unwuchtmessvorrichtung beschleunigt den Rotor 1 auf entsprechende Drehzahlen, wobei der Antrieb auch derart steuerbar ist, dass feste Auswuchtdrehzahlen vorgebbar sind. Die zu erfassenden Messwerte können auch im Normalbetrieb erfasst werden, so dass beispielsweise beim Hochfahren des Rotors 1 bei vorgebbaren Auswuchtdrehzahlen die Messwerte erfasst und der Auswerteeinrichtung 4 zugeführt werden. Der Rotor 1 kann auch auf seine Betriebsdrehzahl beschleunigt werden.

Bei dem erfindungsgemäßen Verfahren wird anstelle eines Kalibrierlaufs mit einem speziellen Meister eine Prozesskalibrierung durchgeführt, bei der die Kalibrierung während dem eigentlichen Auswuchten des Rotors 1 erfolgt, indem der Auswuchtlauf, also der Ausgleichslauf, als Kalibrierlauf genutzt wird. In diesem Sinne kann das erfindungsgemäße Verfahren auch als Prozesskalibrierung bezeichnet werden. Die Kalibrierung kann für nachfolgende Rotoren genutzt werden. Der für die Kalibrierung genutzte Rotor kann von der Prozesskalibrierung bei der Messung der Unwucht nach der Korrektur profitieren.

Bei dem erfindungsgemäßen Verfahren wird der Schwingvektor für einen Ausgleichsschritt vor dem Ausgleich mithilfe eines geeigneten Messaufnehmers 3 gemessen und als Schwingvektor $\vec{s_0}$, von der Auswertevorrichtung 4 gespeichert. Die Berechnung der Unwucht erfolgt mit der aktuell gültigen Kalibrierung der Auswuchtmaschine, das heißt mithilfe der Kalibrierung, die bereits in der Auswuchtmaschine gespeichert ist. Zu Beginn einer Produktion gibt es noch keine vorherigen Ausgleichsschritte, die zur Berechnung der Kalibrierung hinzugezogen werden können. Die erste Kalibrierung und folglich die Berechnung der Unwucht kann mithilfe einer Meisterkalibrierung erfolgen. Alternativ könnten Testausgleiche vorgenommen werden, ohne die tatsächliche Unwucht zu kennen. Alle weiteren Kalibrierungen werden mithilfe des erfindungsgemäßen Verfahrens durchgeführt.

Die berechnete Unwucht $\vec{u}$ wird am Rotor 1 ausgeglichen und die Schwingung als Restschwingungen erneut gemessen und als $\vec{s_1}$ gespeichert. Die Differenz $\vec{\delta s} = \vec{s_1} - \vec{s_0}$ und die ausgeglichene Unwucht für den Ausgleichslauf $k$ als $\vec{\delta s_k}$ und $\vec{u_k}$ gespeichert, wobei ein Ausgleichslauf beziehungsweise Ausgleichsschritt entweder denselben oder einen neuen Rotor beinhalten kann. Zur Berechnung der Prozesskalibiermatrix $K$ wird das Gleichungssystem $S = UK^T$ gelöst. Hierbei enthält die Matrix $S$ für jeden Ausgleichsschritt eine Zeile mit dem transponierten Schwingvektor des Schrittes $k$ mit $S_k = \delta \vec{s_k^T}$. Entsprechend enthält die Matrix $U$ in jeder Zeile den transponierten Unwuchtvektor eines Schrittes $U_k = \vec{u_k^T}$.

Das Gleichungssystem enthält auf der rechten Seite eine Matrix $U$ sowie als Unbekannte die Matrix der $K^T$ und kann für jede Spalte von $S$ und $K^T$ einzeln gelöst werden. Da das Gleichungssystem im allgemeinen mehr Zeilen als Spalten hat (es werden mehr Auswuchtschritte bzw. Rotoren 1 als Unwuchtebenen verwendet), ist es überbestimmt und kann mittels eines Optimierungsverfahrens, wie beispielsweise dem Verfahren der linearen Ausgleichsrechnung gelöst werden. Die Prozesskalibriermatrix wird im Anschluss durch Transposition von $K^T$ bestimmt.

Obwohl bei einer normalen Kalibrierung mit einem Rotor 1 für P Ebenen P+1 Kalibrierläufe benötigt werden, funktioniert das erfindungsgemäße Verfahren auch mit einem Ausgleichsschritt pro Rotor 1, unabhängig von der Anzahl der Ebenen. Das ist ein Vorteil des Verfahrens, denn bei Serienprozessen ist eine geringe Taktzeit wichtig und damit ergibt sich häufig die Forderung nach nur einem Ausgleichsschritt. Es hat sich gezeigt, dass mithilfe des erfindungsgemäßen Verfahrens eine geringe Taktzeit realisiert werden kann.

Bei dem Verfahren wird die Prozesskalibriermatrix zur Berechnung der Unwucht mithilfe des Einflusskoeffizientenverfahrens verwendet. Es sei in diesem Zusammenhang darauf hingewiesen, dass häufig das Einflusskoeffizientenverfahren im Zusammenhang mit wellenelastischen Rotoren benutzt wird. Jedoch kann das Einflusskoeffizientenverfahren als allgemeines Verfahren verstanden werden, das sowohl beim Auswuchten starrer wie auch wellenelastischer Rotoren verwendet wird. Im Falle starrer Rotoren ist lediglich die Größe der Einflusskoeffizientenmatrix, die im Sinne der Erfindung auch als Prozesskalibriermatrix bezeichnet wird, kleiner und es wird nur eine feste Drehzahl benutzt. Alternativ kann auch ein sonstiges Optimierungsverfahren zur Berechnung der Unwucht verwendet werden.

Da bei der Prozesskalibrierung eine große Anzahl von Rotoren 1 verwendet wird, erhält man für Messgrößen trotz eines hohen Fehleranteils gute Ergebnisse. Streuende Fehler werden bei der Lösung des überbestimmten Gleichungssystems verringert und nur das systematische Übertragungsverhalten der Rotoren 1 wird bestimmt. Das ist ein großer Vorteil gegenüber der Verwendung eines einzelnen Meisterrotors, der aufgrund seiner individuellen Lagereigenschaften nicht repräsentativ für die Produktionsvielfalt sein muss, so dass eine exakte und fehlerfreie Kalibrierung nicht sichergestellt werden kann.

Die Prozesskalibrierung kann entweder einmalig für eine gewisse Auswahl an Rotoren 1 beziehungsweise Ausgleichsschritten durchgeführt werden oder ständig aktualisiert werden. Es können die für die Ermittlung der Messdaten und Berechnung der Prozesskalibriermatrix K notwendigen Schritte a. bis d. des Verfahrens mit n- Rotoren, also mit mehreren Rotoren, wiederholt werden. Bei einer solchen nachgeführten Kalibrierung wird stets eine gewisse Anzahl zurückliegender Messläufe verwendet (beispielsweise die letzten 200 Rotoren). Hierdurch kann gewährleistet werden, dass die Kalibrierung langsame Veränderungen im Prozess (beispielsweise das Abnutzen eines Werkzeugs oder Veränderungen im vorgelagerten Produktionsschritt) berücksichtigt. Bei der Auswahl der Schritte können weitere Regeln definiert werden, zum Beispiel dass nur Teile verwendet werden sollen, deren Eingangsparameter in bestimmten Grenzen liegen. Hierdurch können beispielsweise besonders kleine Korrekturunwuchten ausgeschlossen werden, deren Ungenauigkeitsbereich größer ist als ihr Nutzen. Falls die Nachführung selbsttätig ohne Eingriff des Bedieners erfolgt, kann man den Prozess als "selbst-lernend" bezeichnen.

Beim serienmäßigen Auswuchten von Turbolader Rumpfgruppen hat sich gezeigt, dass das Schwingungsverhalten auf nichtlineare Weise von den Eingangsunwuchten abhängt, was zur Folge hat, dass abhängig von der Größe der Eingangsschwingungen systematische Ausgleichsfehler generiert werden. Es ergeben sich unterschiedliche Kalibriermatrizen, wenn Eingangsdaten unterschiedlicher Amplitude verwendet werden. Insbesondere bei großen Urunwuchten steigen dadurch die systematischen Ausgleichsfehler. Diesbezüglich hat es sich als vorteilhaft erwiesen, dass Rotoren nach ihrer Ausgangsschwingung $\vec{s_0}$, und/oder ihres Unwuchtvektors $\vec{u}$ in Cluster eingeteilt werden und deren Ausgangsschwingungen und/oder Unwuchtvektoren eine Cluster-Prozesskalibriermatrix bilden, die als bereits vorliegende Prozesskalibriermatrix verwendet wird. Das heißt, es können bereits vorliegende Prozesskalibriermatrizen herangezogen werden. Anhand zum Beispiel der Ausgangsschwingung im Urzustand wird entschieden, für welche Kalibrierung der jeweilige Lauf verwendet werden kann, das heißt, welche Cluster-Prozesskalibriermatrix ausgewählt wird oder ob die aktuelle Prozesskalibriermatrix vorteilhaft wäre. Bei der Unwuchtberechnung erfolgt ebenso eine Wahl der gespeicherten Prozesskalibriermatrizen anhand der Größe der Ausgangsschwingungen.

Zur Wahl der Eingangsgröße muss aus dem Schwingungslevel eine skalare (oder mehrdimensionale) Auswahlgröße berechnet werden. Das kann beispielsweise der Unwuchtbetrag anhand einer gemittelten Prozesskalibriermatrix sein oder die maximalen Schwingungsbeträge. Zur Wahl der Prozesskalibriermatrix zur Unwuchtberechnung, kann entweder die Cluster-Prozesskalibriermatrix des jeweiligen Clusters auswählen oder eine individuelle Prozesskalibriermatrix aus den vorhandenen Cluster-Prozesskalibriermatrix interpoliert werden.

## Patentansprüche

1. Verfahren zur Kalibrierung einer Auswuchtmaschine in einem Ausgleichlauf $k$ für in einem Serienprozess gefertigte Rotoren, bei dem ein auszugleichender Rotor (1) in Lagern (2) drehbar gelagert und mittels einer Antriebseinheit beschleunigt wird, umfassend folgende Schritte:

a. bei dem zumindest ein Messaufnehmer (3) eine Ausgangsschwingung des Rotors (1) vor einem Unwuchtausgleich bestimmt und diese an eine Auswertevorrichtung (4) übermittelt, die den Messwert als Schwingvektor $\vec{s_0}$ speichert,

b. bei dem eine Unwucht am Rotor (1) in einem Ausgleichsschritt ausgeglichen wird, wobei die Unwucht mithilfe einer vorliegenden Prozesskalibriermatrix $K$ berechnet wird,

c. bei dem eine Restschwingung des Rotors (1) von dem Messaufnehmer (3) gemessen, an die Auswerteeinheit (4) übermittelt und als Schwingvektor $\vec{s_1}$ gespeichert wird,

d. bei dem die Differenz $\vec{\delta s} = \vec{s_1} - \vec{s_0}$ und die ausgeglichene Unwucht für den Ausgleichslauf $k$ als $\vec{\delta s_k}$ und $\vec{u_k}$ von der Auswerteeinheit (4) gespeichert werden,

e. bei dem aus den Messdaten eine Prozesskalibriermatrix $K$ durch Lösung des Gleichungssystems $S = UK^T$ bestimmt wird, wobei die Matrix S für jeden Ausgleichsschritt eine Zeile mit dem transponierten Schwingvektor $S_k = \delta \vec{s_k^T}$ für den Schritt enthält und die Matrix in jeder Zeile den transponierten Unwuchtvektor des Schrittes $k$ enthält und die Prozesskalibriermatrix durch Transposition von $K^T$ berechnet wird und

f. bei dem die Prozesskalibriermatrix gemäß Schritt e. als Kalibriermatrix in der Auswerteeinheit (4) gespeichert und zur Berechnung eines unbekannten Unwuchtvektors eines nachfolgenden Rotors (1) verwendet wird.

2. Verfahren nach Anspruch 1, **dadurch gekennzeichnet, dass** für die Berechnung der Prozesskalibriermatrix $K$ die Schritte a. bis d. mit n-Rotoren wiederholt werden.

3. Verfahren nach einem der vorhergehenden Ansprüche, **dadurch gekennzeichnet, dass** das Gleichungssystem $S = UK^T$ nach dem Verfahren der linearen Ausgleichsrechnung gelöst wird.

4. Verfahren nach Anspruch 1, **dadurch gekennzeichnet, dass** bereits ausgewuchtete Rotoren nach ihrer Ausgangsschwingung $\vec{s_0}$, und/oder ihres Unwuchtvektors $\vec{u}$ in Cluster eingeteilt werden und aus deren Ausgangsschwingungen und/oder Unwuchtvektoren eine Cluster-Prozesskalibriermatrix berechnet wird und eine Cluster-Prozesskalibriermatrix als bereits vorliegende Prozesskalibriermatrix ausgewählt wird, die Rotoren umfasst, deren Ausgangsschwingungen und/oder Unwuchtvektoren zu der Ausgangsschwingung und/oder des Unwuchtvektors des auszuwuchtenden Rotors (1) zumindest ähnlich sind.

5. Verfahren nach Anspruch 4, **dadurch gekennzeichnet, dass** eine Cluster-Prozesskalibriermatrix aus ausgewählten Cluster-Prozesskalibriermatrizen interpoliert wird und diese als bereits vorliegende Prozesskalibriermatrix verwendet wird.

6. Verfahren nach einem der vorhergehenden Ansprüche, **dadurch gekennzeichnet, dass** die Kalibrierung entweder einmalig für eine definierte Anzahl von Rotoren erfolgt oder bei dem jedem Lauf der Auswuchtmaschine aktualisiert wird.

**Claims**

1. Method for calibrating a balancing machine in a correction run $k$ for rotors manufactured in a series process, in which a rotor to be corrected (1) is rotatably mounted in bearings (2) and accelerated by means of a drive unit, comprising the following steps:

   a. in which at least one measuring sensor (3) determines an initial vibration of the rotor (1) prior to the imbalance correction and transmits it to an evaluation device (4), which stores the measured value as vibration vector $\vec{s}_0$,
   b. in which an imbalance on the rotor (1) is corrected in an imbalance correction step, wherein the imbalance is calculated with the use of an existing process calibration matrix $K$,
   c. in which a residual vibration of the rotor (1) is measured by the measuring sensor (3), is transmitted to the evaluation unit (4) and is stored as vibration vector $\vec{s}_1$,
   d. in which the difference $\vec{\delta s} = \vec{s}_1 - \vec{s}_0$ and the corrected imbalance for the correction run $k$ *is* stored as $\vec{\delta s}_k$ and $\vec{u}_k$ by the evaluation unit (4),
   e. in which a process calibration matrix $K$ is determined from measurement data by solving the equation system $S = UK^T$, wherein matrix $S$ contains a line for every imbalance correction step having a transposed vibration vector $S_k = \vec{\delta s}_k^T$ for the correction step and that matrix contains in every line the transposed imbalance vector of step $k$ and the process calibration matrix is calculated by transposing $K_T$ and
   f. in which the process calibration matrix according to step e. is stored as a calibration matrix in the evaluation unit (4) and is used to calculate an unknown imbalance vector of a subsequent rotor (1).

2. Method according to claim 1, **characterised in that** steps a. to d. are repeated with n rotors for calculating process calibration matrix K.

3. Method according to one of the preceding claims, **characterised in that** the equation system S = $UK^T$ is solved according to the linear correction calculation procedure.

4. Method according to claim 1, **characterised in that** already balanced rotors are categorised into clusters according to their initial vibration $\vec{s}_0$ and/or their imbalance vector $\vec{u}$ and from their initial vibrations and/or imbalance vectors, one calculates a cluster process calibration matrix and one selects a cluster process calibration matrix as the already available process calibration matrix, which comprises rotors whose initial vibrations and/or imbalance vectors are at least similar to the initial vibration and/or imbalance vector of the rotor (1) to be balanced.

5. Method according to claim 4, **characterised in that** a cluster process calibration matrix is interpolated from selected cluster process calibration matrices and that matrix is used as the already available process calibration matrix.

6. Method according to one of the preceding claims, **characterised in that** the calibration is either performed one time for a defined number of rotors or is updated for every run of the balancing machine.

**Revendications**

1. Procédé pour calibrer une machine d'équilibrage dans un cycle d'équilibrage k pour des rotors fabriqués en série, dans lequel un rotor (1) à équilibrer est logé rotatif dans des paliers (2) et est accéléré au moyen d'une unité d'entraînement, comprenant les étapes suivantes

   a. dans lequel au moins un capteur de mesure (3) détermine une oscillation de sortie du rotor (1) avant un équilibrage du balourd et transmet celle-ci à un dispositif d'évaluation (4) qui mémorise la valeur de mesure en tant que vecteur d'oscillation $\vec{s}_0$ ,
   b. dans lequel un balourd du rotor (1) est équilibré au cours d'une étape d'équilibrage, le balourd étant calculé à l'aide d'une matrice de calibrage de processus K disponible,
   c. dans lequel une oscillation résiduelle du rotor (1) est mesurée par le capteur de mesure (3), transmise à l'unité d'évaluation (4) et mémorisée en tant que vecteur d'oscillation $\vec{s}_1$ ,
   d. dans lequel la différence $\vec{\delta s} = \vec{s}_1 - \vec{s}_0$ et le

balourd équilibré pour l'étape d'équilibrage $k$ sont enregistrés sous forme de $\overrightarrow{\delta s_k}$ et $\overrightarrow{u_k}$ par l'unité d'évaluation (4),

e. dans lequel une matrice de calibrage de processus $K$ est déterminée à partir des données de mesure par résolution du système d'équations $S = UK^T$, la matrice S contenant pour chaque étape d'équilibrage une ligne avec le vecteur d'oscillation transposé $S_k = \overrightarrow{\delta s_k^T}$ pour l'étape, et la matrice contenant dans chaque ligne le vecteur de balourd transposé de l'étape $k$, et la matrice de calibrage de processus étant calculée par transposition de $K^T$ et

f. dans lequel la matrice de calibrage de processus selon l'étape e. est mémorisée en tant que matrice de calibrage dans l'unité d'évaluation (4) et est utilisée pour calculer un vecteur de balourd inconnu d'un rotor (1) suivant.

2. Procédé selon la revendication 1, **caractérisé en ce que** pour le calcul de la matrice de calibrage de processus $K$, les étapes a. à d. sont répétées avec n rotors.

3. Procédé selon l'une des revendications précédentes, **caractérisé en ce que** le système d'équations $S = UK^T$ est résolu selon le procédé de calcul d'équilibrage linéaire.

4. Procédé selon la revendication 1, **caractérisé en ce que** des rotors déjà équilibrés sont répartis en clusters selon leur oscillation de sortie $\overrightarrow{s_0}$ et/ou leur vecteur de déséquilibre $\overrightarrow{u}$, et une matrice de calibrage de processus de clusters est calculée à partir de leurs oscillations de sortie et/ou de leurs vecteurs de déséquilibre, et comme matrice de calibrage de processus disponible, on sélectionne une matrice de calibrage de processus de clusters qui comprend des rotors dont les oscillations de sortie et/ou les vecteurs de déséquilibre sont au moins similaires à l'oscillation de sortie et/ou au vecteur de déséquilibre du rotor (1) à équilibrer.

5. Procédé selon la revendication 4, **caractérisé en ce qu'**une matrice de calibrage de processus de cluster est interpolée à partir de matrices de calibrage de processus de cluster sélectionnées, et est utilisée comme matrice de calibrage de processus disponible.

6. Procédé selon l'une des revendications précédentes, **caractérisé en ce que** le calibrage est effectué une seule fois pour un nombre défini de rotors, ou est mis à jour à chaque utilisation de la machine d'équilibrage.

**FIG. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VERÖFFENTLICHUNG.** GENERAL INFLUENCE COEFFICIENT ALGORITHM IN BALANCING OF ROTATING MACHINERY. *INTERNATIONAL JOURNAL OF ROTATING MACHINERY,* 01. Marz 2004, vol. 10 (2), 85-90

- **VERÖFFENTLICHUNG.** Balancing of high-speed machinery: Theory, methods and experimental results. *MECHANICAL SYSTEMS AND SIGNAL PROCESSING,* 01. Januar 1987, vol. 1 (1), 105-134